# EUROPEAN PATENT SPECIFICATION

(11) **EP 3 589 517 B1**
(45) Date of publication and mention of the grant of the patent: **18.11.2026**
(21) Application number: 18760300.6
(22) Date of filing: 01.03.2018
(51) Int. Cl.: B60R 21/205, B60R 21/16, B60R 21/20, B60R 21/231

(54) **CENTRAL PASSENGER AIR BAG**
ZENTRALER AIRBAG FÜR INSASSEN
COUSSIN DE SÉCURITÉ GONFLABLE POUR PASSAGER CENTRAL

(30) Priority: 01.03.2017 US 201762465187 P
(43) Date of publication of application: 08.01.2020
(73) Proprietor: ZF Passive Safety Systems US Inc., Washington, MI 48094 (US)
(72) Inventor: FISCHER, Kurt F., Rochester, Michigan 48307 (US); GOULD, Douglas M., Lake Orion, Michigan 48307 (US); SCHROEDER, Alexandra E., Lenox, Michigan 48050 (US)
(74) Representative: ZF LIFETEC Intellectual Property
(86) International application number: PCT/US2018/020353
(87) International publication number: WO 2018/160782

(56) References cited:
- WO-A1-2016/032834
- US-A1- 2005 098 994
- US-A1- 2015 343 986
- US-A1- 2015 343 986
- US-A1- 2015 367 802
- US-A1- 2015 367 802
- US-A1- 2016 297 393
- US-A1- 2016 297 393
- US-B1- 9 227 587
- US-B1- 9 227 587

## Description

The invention refers to a vehicle occupant safety system for helping to protect occupants of a vehicle in the event of a collision.

It is known to provide an inflatable vehicle occupant protection device, such as an air bag, for helping to protect an occupant of a vehicle. One particular type of air bag is a frontal air bag inflatable between an occupant of a front seat of the vehicle and an instrument panel of the vehicle. Such air bags may be driver air bags or passenger air bags. When inflated, the driver and passenger air bags help protect the occupant from impacts with parts of the vehicle such as the instrument panel and/or a steering wheel of the vehicle.

Passenger air bags are typically stored in a deflated condition in a housing that is mounted to the vehicle instrument panel. An air bag door is connectable with the housing and/or instrument panel to help enclose and conceal the air bag in a stored condition. Upon deployment of the passenger air bag, the air bag door opens to permit the air bag to move to an inflated condition. The air bag door opens as a result of forces exerted on the door by the inflating air bag.

Driver air bags are typically stored in a deflated condition in a housing that is mounted on the vehicle steering wheel. An air bag cover is connectable with the housing and/or steering wheel to help enclose and conceal the air bag in a stored condition. Upon deployment of the driver air bag, the air bag cover opens to permit the air bag to move to an inflated condition. The air bag cover opens as a result of forces exerted on the cover by the inflating driver air bag.

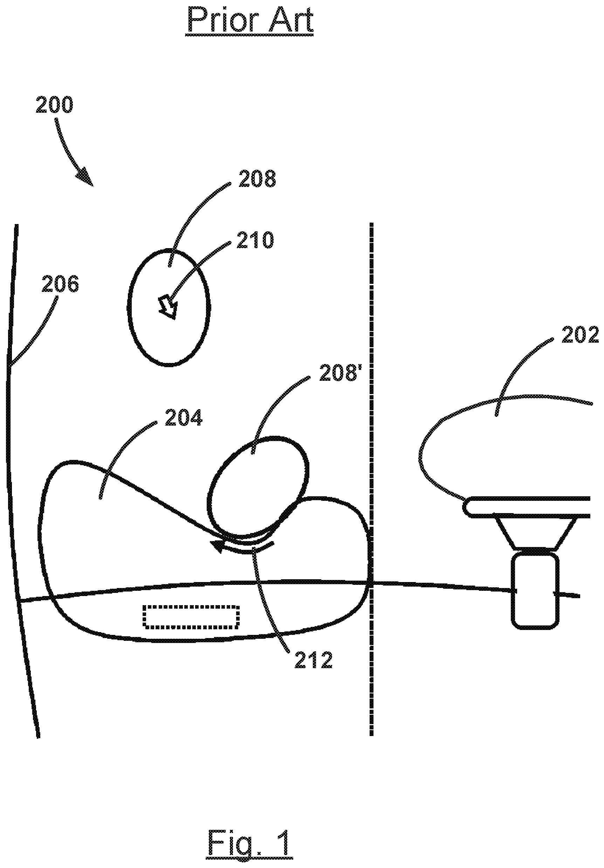

Referring to Fig. 1, a known vehicle occupant protection system 200 can include a steering wheel mounted driver frontal air bag 202 and an instrument panel mounted passenger frontal air bag 204. When the vehicle 206 is involved in oblique or small overlap crashes, the passenger side occupant, whose head is indicated generally at 208, tends to move toward the passenger frontal air bag 204 at an angle, indicated generally by the arrow 210. When the occupant's head engages the air bag 204, as shown at 208', the head can tend to roll off inboard, as indicated generally by the arrow 212, thus incurring a significant amount of head rotation, which can be detrimental.

US 2016/0297393 A1 discloses a vehicle occupant protection system comprising a rearward inflatable central air bag which is positioned between the driver frontal air bag and passenger frontal air bag having a complex 3 dimensional shape corresponding to the adjacent shapes of the driver and the passenger airbag.

US 2015/0343986 A1 discloses an air bag assembly comprising a passenger frontal air bag module with two airbags mounted in common housing.

US 9,227,587 B2 discloses a vehicle occupant protection system comprising a central air bag which is positioned between the driver frontal air bag and passenger frontal air bag. The central airbag extends in an inflated state in a rearward direction from the instrument panel wherein the opposite end is positioned between the vehicle front seat back rests.

US 2015/0367802 A1 discloses a vehicle airbag device comprising a passenger frontal air bag module with two airbags, wherein the first bag inflates and deploys at a vehicle front side of the occupant and the second bag at a vehicle width direction center side of the first bag.

In view thereof, it is an objective of the invention to provide a vehicle occupant safety system that helps better protect front seat occupants of a vehicle in the event of a collision that results in oblique forward occupant movement.

The safety system according to the invention is defined in claim 1.

According to another aspect, alone or in combination with any other aspect, the central air bag can be configured to deploy in a direction that is rearward and outboard in the vehicle so as to engage and support the frontal air bag.

According to another aspect, alone or in combination with any other aspect, the central air bag can be configured to extend rearward of the frontal air bag so that, as the obliquely moving occupant penetrates the frontal air bag. Portions of the frontal air bag displaced by the penetrating occupant can cause the central air bag to arc around the side of the obliquely moving occupant's head to provide support for the head that acts against rotation.

According to another aspect, alone or in combination with any other aspect, the central air bag when engaging the frontal air bag can provide inboard support for the frontal air bag that resists collapse of the frontal air bag in response to receiving the obliquely moving occupant.

According to another aspect, alone or in combination with any other aspect, in response to inboard support being overcome and the frontal air bag collapsing in response to receiving the obliquely moving occupant's head, the central air bag can be configured to arc toward the back of the occupant's head and couteract the tendency for the occupant's head to rotate.

According to the invention the central air bag is a pillow shaped bag having an elongated configuration with a longitudinal axis that extends obliquely relative to the longitudinal vehicle axis in a direction that is rearward and outboard of the vehicle.

According to another aspect, alone or in combination with any other aspect, the central air bag can help support the occupant's head against rolling as a result of moving obliquely into engagement with the frontal air bag.

According to another aspect, alone or in combination with any other aspect, the frontal air bag can be an instrument panel mounted passenger frontal air bag and the central air bag is mounted to the instrument panel inboard of the frontal air bag. The central air being can be configured to deploy rearward and outboard toward the passenger side of the vehicle into engagement with the passenger frontal air bag.

According to another aspect, alone or in combination with any other aspect, the safety system can include a steering wheel mounted driver frontal air bag. The central air bag can also be configured to have a portion inflatable adjacent an inboard portion of the driver frontal air bag to receive and cushion driver side occupant moving obliquely inboard as the result of a vehicle collision.

According to another aspect, alone or in combination with any other aspect, the central air bag can be configured to engage the driver frontal air bag.

According to another aspect, alone or in combination with any other aspect, the central air bag can be configured to reach at least one of the instrument panel and a vehicle steering column.

According to another aspect, alone or in combination with any other aspect, the central air bag can be configured to extend into contact with the passenger frontal air bag so that the passenger frontal air bag serves as a reaction surface for the central air bag when receiving a driver side occupant moving obliquely inboard into engagement with the central air bag.

According to another aspect, alone or in combination with any other aspect, the central air bag can be configured to extend into contact with the instrument panel so that the instrument panel serves as a reaction surface for the central air bag when receiving a driver side occupant moving obliquely inboard into engagement with the central air bag.

According to another aspect, alone or in combination with any other aspect, the central air bag can be configured to be mounted to the instrument panel, the steering column, or to other vehicle structure in the vicinity of the instrument panel.

According to another aspect, the safety system can include a passenger frontal air bag inflatable between an instrument panel and the front seat passenger side vehicle occupant, and a central air bag positioned inboard of the passenger frontal air bag and inflatable rearward and outboard in the vehicle into engagement with the passenger frontal air bag. The central air bag can support an inboard portion of the passenger frontal air bag, using the instrument panel as a reaction surface, against flattening out in response to receiving an obliquely moving occupant.

According to another aspect, alone or in combination with any other aspect, the central air bag can engage the obliquely moving occupant's head and resists rotation of the vehicle occupant's head resulting from moving obliquely into engagement with the frontal air bag.

According to another aspect, alone or in combination with any other aspect, the central air bag can be configured to extend rearward of the passenger frontal air bag so that, as the obliquely moving occupant penetrates the passenger frontal air bag, portions of the frontal air bag displaced by the penetrating occupant cause the central air bag to arc around the side of the obliquely moving occupant's head to provide support for the head that acts against rotation.

According to another aspect, alone or in combination with any other aspect, the central air bag can be a pillow shaped bag having an elongated configuration with a longitudinal axis that extends rearward and outboard of the vehicle.

According to another aspect, alone or in combination with any other aspect, the safety system can also include a steering wheel mounted driver frontal air bag. The central air bag can also be configured to have a portion inflatable adjacent an inboard portion of the driver frontal air bag to receive and cushion driver side occupant moving obliquely inboard as the result of a vehicle collision.

According to another aspect, alone or in combination with any other aspect, the central air bag can be configured to engage the driver frontal air bag.

According to another aspect, alone or in combination with any other aspect, the central air bag can be is configured to extend into contact with the passenger frontal air bag so that the passenger frontal air bag serves as a reaction surface for the central air bag when receiving a driver side occupant moving obliquely inboard into engagement with the central air bag.

According to another aspect, the safety system can include a driver frontal air bag inflatable from a vehicle steering wheel between an instrument panel of the vehicle and a driver side front seat occupant of the vehicle. The safety system can also include a passenger frontal air bag inflatable from the instrument panel between the instrument panel and a passenger side front seat occupant of the vehicle. The safety system can also include a central air bag positioned between the driver frontal air bag and passenger frontal air bag and being inflatable away from the instrument panel rearward and outboard toward the passenger side of the vehicle. The central air bag when inflated can engage the passenger frontal air bag and having portions adjacent or engaging the driver frontal air bag.
Fig. 1 is a schematic illustration depicting a known vehicle occupant protection system.
Fig. 2 is a schematic illustration depicting a vehicle occupant protection system including a central airbag in a first condition.
Fig. 3 is a schematic illustration depicting a vehicle occupant protection system including a central airbag in a second condition.
Fig. 4 is a schematic illustration depicting a vehicle occupant protection system including a central airbag in a third condition.

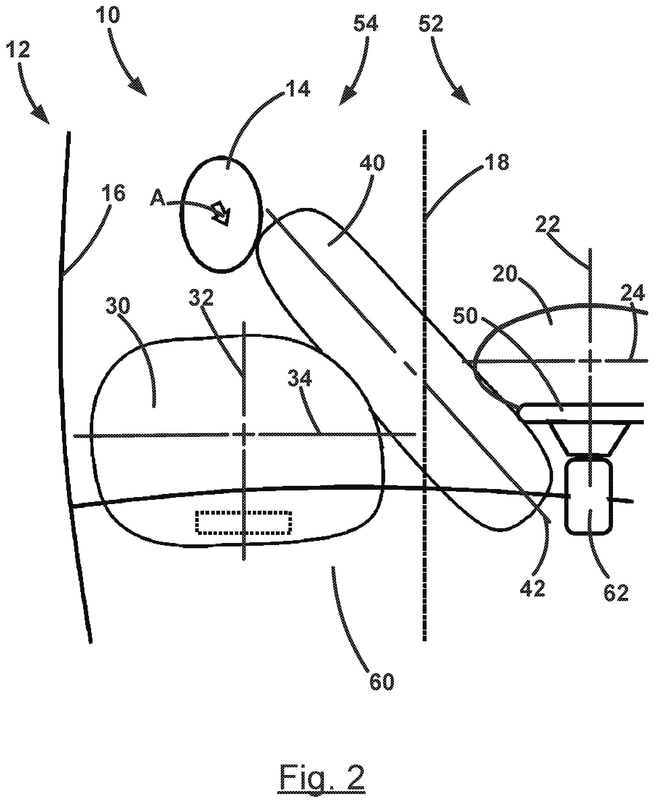

Referring to Fig. 2, a system 10 for helping to protect one or more occupants 14 of driver side 52 or passenger side 54 of a vehicle 12 includes inflatable vehicle occupant protection devices in the form of air bags. The air bags include a steering wheel mounted driver frontal air bag 20, an instrument panel mounted passenger frontal air bag 30, and an instrument panel mounted central air bag 40. Each of these air bags 20, 30, 40 can be part of an air bag module that includes an inflator and a housing. Each air bag 20, 30, 40 has a stored condition in which the air bag is folded and placed in the housing. The module including the driver air bag 20 is mounted to the steering wheel 50. The modules including the passenger air bag 30 and the central air bag 40 are mounted to or within the dash or instrument panel 60 of the vehicle 12.

The inflators associated with the air bags 20, 30, 40 are actuatable to provide inflation fluid to an inflatable volume of the air bag to deploy the air bag to the inflated condition. The inflator may be of any known type, such as stored gas, solid propellant, augmented, or hybrid. The system 10 includes one or more sensors for sensing an event for which inflation of the air bag is desired, such as a collision, and a controller for controlling operation of the inflators. The inflators are operatively connected to the controller via lead wires.

The air bags 20, 30, 40 can be constructed of any suitable material, such as nylon (e.g., woven nylon 6-6 yarns), and may be constructed in any suitable manner. For example, the air bag may include one or more pieces or panels of material. If more than one piece or panel is used, the pieces or panels may be interconnected by known means, such as stitching, ultrasonic welding, heat bonding, or adhesives, to form the air bag. The air bag may be uncoated, coated with a material, such as a gas impermeable urethane, or laminated with a material, such as a gas impermeable film. The air bag thus may have a gas-tight or substantially gas-tight construction. Those skilled in the art will appreciate that alternative materials, such as polyester yarn, and alternatives coatings, such as silicone, may also be used to construct the air bag.

Upon sensing the occurrence of an event for which inflation of the air bag is desired, such as a vehicle collision, the controller provides signals to the inflators via the lead wires. Upon receiving the signals from the controller, the inflators are actuated and provide inflation fluid to the inflatable volume of the air bags 20, 30, 40 in a known manner. The inflating air bags exert a force on their module closures (e.g., housings/doors) which places the modules in an opened condition. The air bags 20, 30, 40 inflate from their respective housings to the deployed conditions indicated generally in Fig. 2. The air bags 20, 30, 40, while inflated, help protect the vehicle occupant from impacts with parts of the vehicle, such as the instrument panel 60 and/or steering wheel 50.

The air bags 20, 30, 40, when deployed in response to an event for which occupant protection is desired, help protect the occupant by helping to absorb the force of impacts placed on the air bag by the occupants.

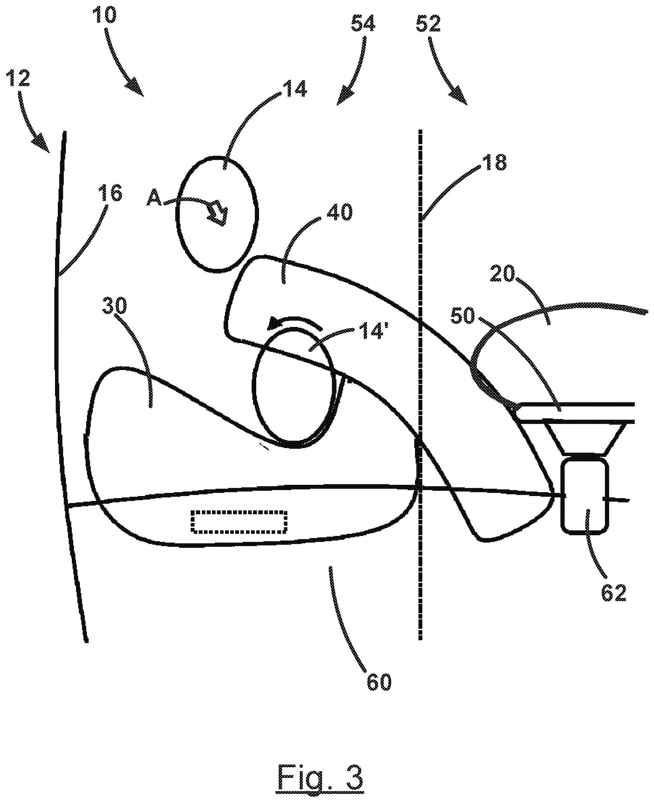

In certain vehicle crash events, such as oblique or small overlap crashes, occupants 14 can move in the vehicle 12 in a forward direction, indicated generally by arrow A in Figs. 2 and 3, that is oblique with respect to the vehicle. By "oblique" with respect to the vehicle 12, it is meant that the occupant moves forward in a direction that is neither parallel nor perpendicular to the longitudinal axis 18 of the vehicle. Because the driver and passenger frontal air bags 20, 30 are arranged with their respective central axes 22, 32 parallel to the vehicle axis 18, and their respective lateral axes 24, 34 perpendicular to their central axes and the vehicle axis, this occupant movement is also oblique to the respective air bag axes for each occupant. Left unchecked, this oblique movement can result in the occupant's head rolling and incurring a significant amount of head rotation (see Fig. 1, described above).

Referring to Figs. 2 and 3, according to one aspect, the central air bag 40 helps support the occupant's head against rolling as a result of moving obliquely into engagement with the frontal air bag 30. The central air bag 40 is a pillow shaped bag (PSB) having an elongated configuration with a longitudinal axis 42 that extends obliquely relative to the vehicle axis 18 in a direction that is rearward and outboard to the passenger side 54 of the vehicle 12. The central air bag 40 can be mounted to the instrument panel 60, the steering column 62, or to other vehicle structure in the vicinity of the instrument panel.

The central air bag 40 serves two primary purposes: to support the passenger to reduce head twisting loads, and to support the driver by providing a cushion to minimize head to instrument panel contact.

To help reduce head twisting loads, the central air bag 40 can engage the inboard portion of the passenger frontal air bag 30 and can help serve as a central support for the passenger frontal air bag. As the occupant 14 penetrates the frontal air bag 30, portions of the frontal air bag displaced by the penetrating occupant cause the central air bag 40 to arc around the side of the head 14 to provide support for the head that acts against rotation.

In the small overlap/oblique crash scenario, the occupant 14 moves in the direction A toward the inboard portion of the air bag 30. Since there is no lateral reaction surface against which the air bag 30 can rest, the air bag tends to flatten out, allowing the volume of the air bag to shift outboard in the vehicle. As shown in Fig. 3, this results in a greater bag volume on the outboard side of the occupant 14 and a lesser volume on the inboard side of the occupant. This causes the forces acting on the occupant 14 to be greater on the outboard side of the head and lesser on the inboard side of the head. This imbalance causes the head 14 to rotate or roll in the inboard direction (see Fig. 1) and can even cause the head to roll off of the air bag.

The central air bag 40 provides support to the side of the frontal air bag 30. In the case shown, it is on the inboard side. The added pillow provides added support without adding a significant amount of volume. It acts like a kickstand on a bike to prevent the bag from collapsing over. As shown in Fig. 3, as the occupant 14 penetrates the bag, the inboard portion of the bag collapses and the central air bag 40 arcs toward the back of the occupant's head to counteract the tendency to rotate.

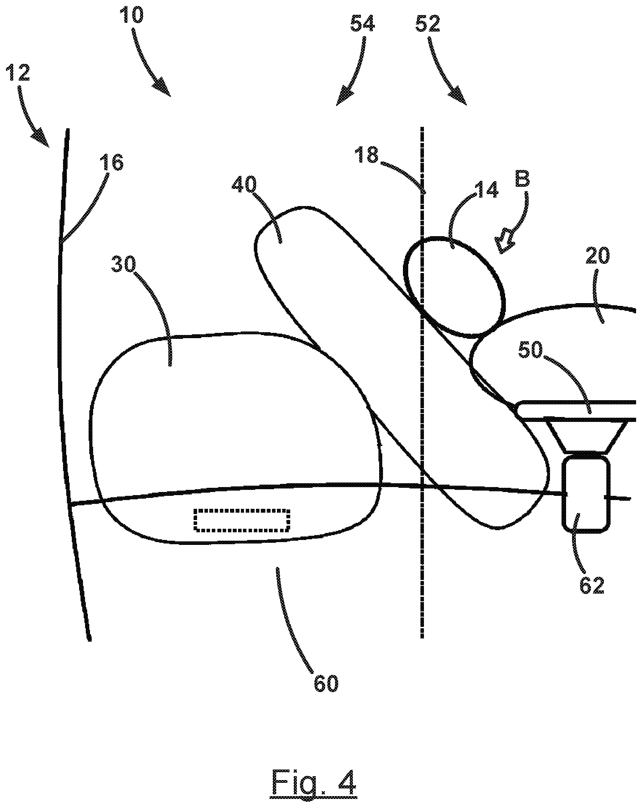

As an added feature, as shown in Fig. 4, the central air bag 40 can be long enough to reach the instrument panel 60 and/or steering column 62 and to provide support to the central air bag 40 for helping to restrain the driver occupant 14. When the occupant 14 moves obliquely (arrow B) toward the steering wheel mounted driver air bag 20 and central air bag 40, the central air bag can help limit, reduce, or block inboard head rotation. Also, the driver frontal air bag 30, having the steering wheel as a reaction surface, and the central air bag 40, having the instrument panel 60, steering column 62, and the passenger frontal air bag 30 as a reaction surface or support, can help absorb impact forces of the penetrating occupant 14.

Those skilled in the art will appreciate that principles similar to those described above in relation to the central air bag 40 can be implemented to help account for crash scenarios where the occupant moves in an obliquely outboard direction (not shown). For this scenario, the vehicle safety system 10 can include an outboard air bag (not shown) similar to the central air bag 40, but placed outboard of the passenger frontal air bag 30 adjacent the side structure 16 of the vehicle 12. The outboard air bag can extend obliquely rearward and inboard in the vehicle, in a manner somewhat equal and opposite the central air bag. This outboard air bag can react with the frontal air bag 30 in the same or similar manner as the central air bag 40 to help block head rotation due to oblique occupant air bag penetration. Similar results can be obtained by placing an outboard air bag on the driver side of the vehicle.

## Claims

1. A vehicle occupant safety system (10) of a vehicle for helping to protect front seat occupants (14) in a vehicle (12) in the event of a collision that results in oblique forward occupant movement (A, B), comprising:
a frontal air bag (20, 30) inflated between an instrument panel and the front seat vehicle occupant (14); and
a central air bag (40) inflated adjacent and inboard of the frontal air bag (20, 30);
wherein the frontal air bag (20, 30) receives and cushions the vehicle occupant (14) moving in an oblique direction (A, B) in the vehicle (12) as the result of a vehicle collision, and
wherein the central air bag (40) supports an inboard portion of the frontal air bag (20, 30) against flattening out in response to receiving the obliquely moving occupant (14), and to engage the obliquely moving occupant's head (14) and resist rotation of the vehicle occupant's head (14) resulting from moving obliquely into engagement with the frontal air bag (20, 30),
wherein the central air bag (40) is a pillow shaped bag having an elongated configuration with a longitudinal axis (42) that extends obliquely relative to the longitudinal vehicle axis (18) in a direction that is rearward and outboard of the vehicle (12).

2. The safety system (10) recited in claim 1, wherein the central air bag (40) is configured to deploy in a direction that is rearward and outboard in the vehicle (12) so as to engage and support the frontal air bag (20, 30).

3. The safety system (10) recited in at least one of the claims 1 or 2, wherein in response to inboard support being overcome and the frontal air bag (20, 30) collapsing in response to receiving the obliquely moving occupant's head (14), the central air bag (40) is configured to arc toward the back of the occupant's head (14) for counteracting the tendency for the occupant's head (14) to rotate.

4. The safety system (10) recited in at least one of the claims 1 to 3, wherein the frontal air bag (20, 30) is an instrument panel (60) mounted passenger frontal air bag (30) and the central air bag (40) is mounted to the instrument panel (60) inboard of the frontal air bag (20, 30), the central air bag (40) being configured to deploy rearward and outboard toward the passenger side (54) of the vehicle (12) into engagement with the passenger frontal air bag (30).

5. The safety system (10) recited in at least one of the claims 1 to 4, further comprsing a steering wheel (50) mounted driver frontal air bag (20), wherein the central air bag (40) is also configured to have a portion inflatable adjacent an inboard portion of the driver frontal air bag (20) to receive and cushion driver side (52) occupant (14) moving obliquely inboard as the result of a vehicle collision.

6. The safety system (10) recited in at least one of the claims 1 to 5, wherein the central air bag (40) is configured to engage the driver frontal air bag, and/or wherein the central air bag (40) is configured to reach at least one of the instrument panel (50) and a vehicle steering column (62).

7. The safety system (10) recited in at least one of the claims 1 to 6, wherein the central air bag (40) is configured to extend into contact with the passenger frontal air bag (30) and/or the instrument panel (50)so that the passenger frontal air bag (30) and/or the instrument panel (50) serve(s) as a reaction surface for the central air bag (40) when receiving a driver side (52) occupant (14) moving obliquely inboard into engagement with the central air bag (40).

8. The safety system (10) recited in at least one of the claims 1 to 7, wherein the central air bag (40) is configured to be mounted to the instrument panel (50), the steering column (62), or to other vehicle structure in the vicinity of the instrument panel (50).

9. The safety system (10) recited in at least one of the claims 1 to 8, wherein the central air bag (40) engages the obliquely moving occupant's head (14) and resists rotation of the vehicle occupant's head (14) resulting from moving obliquely into engagement with the frontal air bag (20, 30).

10. The safety system (10) recited in at least one of the claims 1 to 9, wherein the central air bag (40) is configured to extend rearward of the passenger frontal air bag (30) so that, as the obliquely moving occupant (14) penetrates the passenger frontal air bag (30), portions of the frontal air bag (30) displaced by the penetrating occupant (14) cause the central air bag (40) to arc around the side of the obliquely moving occupant's head (14) to provide support for the head (14) that acts against rotation.

11. The safety system (10) recited in at least one of the claims 5 to 10, wherein the central air bag (40) is positioned between the driver frontal air bag (20) and passenger frontal air bag (30), being inflatable away from the instrument panel (50) rearward and outboard toward the passenger side (54) of the vehicle, the central air bag (40) when inflated engaging the passenger frontal air bag (30) and the driver frontal air bag (20).

## Patentansprüche

1. Fahrzeuginsassensicherheitssystem (10) eines Fahrzeugs zum Schutz von Insassen (14) auf den Vordersitzen in einem Fahrzeug (12) im Falle eines Aufpralls, der zu einer Insassenbewegung schräg nach vorne (A, B) führt, mit:
einem Frontairbag (20, 30), der zwischen einem Armaturenbrett und dem Fahrzeuginsassen auf dem Vordersitz (14) aufgeblasen wird; und
einem zentralen Airbag (40), der angrenzend an den und innerhalb des Frontairbags (20, 30) aufgeblasen wird;
wobei der Frontairbag (20, 30) den sich infolge eines Fahrzeugaufpralls in einer Schrägrichtung (A, B) im Fahrzeug (12) bewegenden Fahrzeuginsassen (14) aufnimmt und abfängt, und
wobei der zentrale Airbag (40) einen innerseitigen Bereich des Frontairbags (20, 30) abstützt, damit dieser beim Aufnehmen des sich schräg bewegenden Insassen (14) nicht abflacht, und in den Kopf des sich schräg bewegenden Insassen (14) eingreift sowie einer Drehung des Kopfes des Insassen (14) entgegenwirkt, die durch die schräge Bewegung in Eingriff mit dem Frontairbag (20, 30) entsteht,
wobei der zentrale Airbag (40) ein kissenförmiger Sack mit einer langgestreckten Gestalt mit einer Längsachse (42) ist, die bezüglich der Fahrzeuglängsachse (18) schräg in einer Richtung verläuft, die sich nach hinten und außerhalb des Fahrzeugs (12) erstreckt.

2. Sicherheitssystem (10) nach Anspruch 1, wobei der zentrale Airbag (40) so ausgeführt ist, dass er sich in einer Richtung nach hinten und außenseitig im Fahrzeug (12) entfaltet, um in den Frontairbag (20, 30) einzugreifen und diesen abzustützen.

3. Sicherheitssystem (10) nach mindestens einem der Ansprüche 1 oder 2, wobei als Reaktion darauf, dass die innere Abstützung überwunden wird und der Frontairbag (20, 30) als Reaktion auf die Aufnahme des sich schräg bewegenden Kopfes des Insassen (14) zusammenfällt, der zentrale Airbag (40) derart ausgeführt ist, dass er sich zum Hinterkopf des Insassen (14) hin wölbt, um der Tendenz des Kopfes des Insassen (14) zur Drehung entgegenzuwirken.

4. Sicherheitssystem (10) nach mindestens einem der Ansprüche 1 bis 3, wobei der Frontairbag (20, 30) aus einem am Armaturenbrett angebrachten Beifahrer-Frontairbag (30) besteht und der zentrale Airbag (40) an dem Armaturenbrett (60) innerhalb des Frontairbags (20, 30) angebracht ist, wobei der zentrale Airbag (40) derart ausgeführt ist, dass er sich nach hinten und außen zur Beifahrerseite (54) des Fahrzeugs (12) hin in Eingriff mit dem Beifahrer-Frontairbag (30) entfaltet.

5. Sicherheitssystem (10) nach mindestens einem der Ansprüche 1 bis 4, weiterhin mit einem am Lenkrad (50) angebrachten Fahrer-Frontairbag (20), wobei der zentrale Airbag (40) ebenfalls derart ausgeführt ist, dass er einen angrenzend an einen innenseitigen Bereich des Fahrer-Frontairbags (20) aufblasbaren Bereich hat, um den fahrerseitigen (52) Insassen (14), der sich infolge eines Fahrzeugaufpralls schräg nach innen bewegt, aufzunehmen und abzudämpfen.

6. Sicherheitssystem (10) nach mindestens einem der Ansprüche 1 bis 5, wobei der zentrale Airbag (40) derart ausgeführt ist, dass er in den Fahrer-Frontairbag eingreift, und/oder wobei der zentrale Airbag (40) derart ausgeführt ist, dass er mindestens bis zu dem Armaturenbrett (50) und/oder bis zu einer Lenksäule (62) des Fahrzeugs reicht.

7. Sicherheitssystem (10) nach mindestens einem der Ansprüche 1 bis 6, wobei der zentrale Airbag (40) so ausgeführt ist, dass er sich in Kontakt mit dem Beifahrer-Frontairbag (30) und/oder dem Armaturenbrett (50) derart erstreckt, dass der Beifahrer-Frontairbag (30) und/oder das Armaturenbrett (50) beim Aufnehmen eines fahrerseitigen (52) Insassen (14), der sich schräg nach innen in Eingriff mit dem zentralen Airbag (40) bewegt, als Reaktionsfläche für den zentralen Airbag (40) dienen/dient.

8. Sicherheitssystem (10) nach mindestens einem der Ansprüche 1 bis 7, wobei der zentrale Airbag (40) derart ausgeführt ist, dass er am Armaturenbrett (50), an der Lenksäule (62) oder an einem anderen Fahrzeugaufbau in der Nähe des Armaturenbretts (50) angebracht wird.

9. Sicherheitssystem (10) nach mindestens einem der Ansprüche 1 bis 8, wobei der zentrale Airbag (40) in den sich schräg bewegenden Kopf des Insassen (14) eingreift und einer Drehung des Kopfes des Fahrzeuginsassen (14) entgegenwirkt, die durch die Schrägbewegung in Eingriff mit dem Front-Airbag (20, 30) entsteht.

10. Sicherheitssystem (10) nach mindestens einem der Ansprüche 1 bis 9, wobei der zentrale Airbag (40) derart ausgeführt ist, dass er sich nach hinten von dem Beifahrer-Frontairbag (30) erstreckt, so dass, wenn der sich schräg bewegende Insasse (14) in den Beifahrer-Frontairbag (30) eintaucht, von dem eintauchenden Insassen (14) verschobene Bereiche des Frontairbags (30) bewirken, dass sich der zentrale Airbag (40) um die Seite des sich schräg bewegenden Kopfes des Insassen (14) wölbt, um eine Abstützung für den Kopf (14) bereitzustellen, die der Drehung entgegenwirkt.

11. Sicherheitssystem (10) nach mindestens einem der Ansprüche 5 bis 10, wobei der zentrale Airbag (40) zwischen dem Fahrer-Frontairbag (20) und dem Beifahrer-Frontairbag (30) angeordnet ist, und von dem Armaturenbrett (50) weg nach hinten und außen zur Beifahrerseite (54) des Fahrzeugs hin aufblasbar ist, wobei der zentrale Airbag (40) nach dem Aufblasen in den Beifahrer-Frontairbag (30) und den Fahrer-Frontairbag (20) eingreift.

## Revendications

1. Un système de sécurité des occupants (10) d'un véhicule, destiné à contribuer à la protection des occupants des sièges avant (14) d'un véhicule (12) en cas de collision entraînant un déplacement oblique vers l'avant des occupants (A, B), comprenant :
un airbag frontal (20, 30) se gonflant entre un tableau de bord et l'occupant du siège avant (14) ; et
un airbag central (40) se gonflant à proximité immédiate et à l'intérieur de l'airbag frontal (20, 30) ;
pour lequel l'airbag frontal (20, 30) reçoit et amortit l'occupant du véhicule (14) se déplaçant dans une direction oblique (A, B) à l'intérieur du véhicule (12) à la suite d'une collision du véhicule, et
pour lequel l'airbag central (40) soutient une partie intérieure de l'airbag frontal (20, 30) pour l'empêcher de s'aplatir lorsqu'il reçoit l'occupant (14) se déplaçant obliquement, et pour venir en contact avec la tête de l'occupant (14) se déplaçant obliquement et s'opposer à la rotation de la tête de l'occupant (14) résultant de son déplacement oblique lors de l'impact avec le coussin gonflable frontal (20, 30),
pour lequel l'airbag central (40) est un coussin en forme d'oreiller présentant une configuration allongée avec un axe longitudinal (42) qui s'étend obliquement par rapport à l'axe longitudinal du véhicule (18), vers l'arrière et vers l'extérieur du véhicule (12).

2. Le système de sécurité (10) selon la revendication 1, dans lequel l'airbag central (40) est configuré pour se déployer vers l'arrière et vers l'extérieur du véhicule (12) de manière à venir en contact avec l'airbag frontal (20, 30) et à le soutenir.

3. Le système de sécurité (10) tel que décrit dans au moins l'une des revendications 1 ou 2, pour lequel, en réponse au dépassement de la limite de résistance du support intérieur et au déploiement de l'airbag frontal (20, 30) suite à l'impact avec la tête (14) de l'occupant se déplaçant obliquement, le coussin gonflable central (40) est configuré pour se courber vers l'arrière de la tête (14) de l'occupant afin de contrecarrer la tendance de la tête (14) de l'occupant à pivoter.

4. Le système de sécurité (10) tel que décrit dans au moins l'une des revendications 1 à 3, pour lequel l'airbag frontal (20, 30) est un airbag frontal côté passager (30) monté sur le tableau de bord (60) et l'airbag central (40) est monté sur le tableau de bord (60) à l'intérieur de l'airbag frontal (20, 30), le coussin gonflable central (40) étant configuré pour se déployer vers l'arrière et vers l'extérieur en direction du côté passager (54) du véhicule (12) afin de venir en contact avec le coussin gonflable frontal côté passager (30).

5. Le système de sécurité (10) décrit dans au moins l'une des revendications 1 à 4, comprenant en outre un airbag frontal conducteur (20) monté sur le volant (50), pour lequel l'airbag central (40) est également configuré pour comporter une partie gonflable adjacente à une partie intérieure de l'airbag frontal conducteur (20) afin de recevoir et d'amortir le déplacement oblique vers l'intérieur de l'occupant (14) du côté conducteur (52) à la suite d'une collision du véhicule.

6. Le système de sécurité (10) décrit dans au moins l'une des revendications 1 à 5, pour lequel l'airbag central (40) est conçu pour venir en contact avec l'airbag frontal côté conducteur, et/ou pour lequel l'airbag central (40) est conçu pour atteindre au moins l'un parmi le tableau de bord (50) et la colonne de direction (62) du véhicule.

7. Le système de sécurité (10) décrit dans au moins l'une des revendications 1 à 6, pour lequel l'airbag central (40) est configuré pour se déployer de manière à entrer en contact avec l'airbag frontal côté passager (30) et/ou le tableau de bord (50), de sorte que l'airbag frontal côté passager (30) et/ou le tableau de bord (50) serve(nt) de surface de réaction pour l'airbag central (40) lorsque recevant un occupant (14) du côté conducteur (52) se déplaçant obliquement vers l'intérieur pour venir en contact avec l'airbag central (40).

8. Le système de sécurité (10) décrit dans au moins l'une des revendications 1 à 7, pour lequel l'airbag central (40) est conçu pour être monté sur le tableau de bord (50), la colonne de direction (62) ou sur un autre élément de la structure du véhicule situé à proximité du tableau de bord (50).

9. Le système de sécurité (10) décrit dans au moins l'une des revendications 1 à 8, pour lequel l'airbag central (40) entre en contact avec la tête (14) de l'occupant se déplaçant obliquement et s'oppose à la rotation de la tête (14) de l'occupant du véhicule résultant de son déplacement oblique lors de l'entrée en contact avec l'airbag frontal (20, 30).

10. Le système de sécurité (10) décrit dans au moins l'une des revendications 1 à 9, pour lequel l'airbag central (40) est configuré pour s'étendre vers l'arrière de l'airbag frontal côté passager (30) de telle sorte que, lorsque l'occupant (14) se déplaçant obliquement pénètre dans l'airbag frontal côté passager (30), des parties de l'airbag frontal (30) déplacées par l'occupant (14) qui le pénètre amènent l'airbag central (40) à former un arc autour du côté de la tête de l'occupant (14) se déplaçant obliquement afin d'assurer un soutien à la tête (14) qui s'oppose à sa rotation.

11. Le système de sécurité (10) décrit dans au moins l'une des revendications 5 à 10, dans lequel l'airbag central (40) est positionné entre l'airbag frontal côté conducteur (20) et l'airbag frontal côté passager (30), pouvant se gonfler en s'éloignant du tableau de bord (50) vers l'arrière et vers l'extérieur, en direction du côté passager (54) du véhicule, l'airbag central (40), lorsqu'il est gonflé, venant en contact avec l'airbag frontal côté passager (30) et l'airbag frontal côté conducteur (20).
